(19) Europäisches Patentamt
European Patent Office
Office européen des brevets

(11) **EP 2 644 831 B1**

(12) **EUROPEAN PATENT SPECIFICATION**

(45) Date of publication and mention
of the grant of the patent:
**23.06.2021 Bulletin 2021/25**

(51) Int Cl.:
***F01D 5/30*** *(2006.01)*   ***B23D 75/00*** *(2006.01)*

(21) Application number: **13155558.3**

(22) Date of filing: **18.02.2013**

(54) **Method for manufacturing a multi-finger pinned root for a turbine blade and corresponding turbine blade**

Verfahren zur Herstellung einer mit Stiften befestigbaren Schaufelwurzel mit mehreren Fingern einer Turbinenlaufschaufel und entsprechende Turbinenlaufschaufel

Procédé de fabrication d'un pied goupillé multidoigts pour une aube de turbine et aube de turbine correspondante

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.03.2012 JP 2012079867**

(43) Date of publication of application:
**02.10.2013 Bulletin 2013/40**

(73) Proprietor: **Mitsubishi Power, Ltd.**
**Yokohama, Kanagawa 220-8401 (JP)**

(72) Inventors:
 • **Hirano, Atsuya**
  **Tokyo, 100-8220 (JP)**

 • **Takahashi, Masaaki**
  **Tokyo, 100-8220 (JP)**

(74) Representative: **MERH-IP Matias Erny Reichl Hoffmann**
**Patentanwälte PartG mbB**
**Paul-Heyse-Strasse 29**
**80336 München (DE)**

(56) References cited:
**WO-A1-2010/137340    JP-A- S60 222 503**
**JP-A- 2010 043 595    US-A- 1 933 149**
**US-A- 4 440 529**

 • **None**

**Description**

[Technical Field]

The present invention relates to a method for manufacturing a multi-finger pinned root for a turbine blade attached to a turbine rotor and to a turbine blade.

[Background Art]

A steam turbine for power generation has a rotary shaft referred to as a turbine rotor which is coupled with turbine blades . The turbine blades rotate the turbine rotor by receiving steam power and cause electric power to be generated. When the turbine rotor rotates, a centrifugal force is generated in each turbine blade, and the centrifugal force is supported where the turbine blade is coupled with the turbine rotor. The turbine blade and the turbine rotor can be coupled using, for example, a pin and finger root form, a straddle mount form, or a fir-tree form. A turbine blade and a turbine rotor coupled in the pin and finger root form each have a fork-shaped part referred to as a fork. The turbine blade and the turbine rotor are coupled using coupling pins inserted in holes formed through them with their forks meshed with each other. When the turbine rotor rotates, the centrifugal force generated in the turbine blade is supported by the coupling pins allowing a high stress to be circumferentially generated over the inner surface of each pin insertion hole. This results in a high risk of fatigue damage to the inner surface of each pin insertion hole. To reduce such a risk of fatigue damage, it is necessary to pay particular attention to the machining accuracy for and the surface finish of each pin insertion hole.

To form a pin insertion hole through a part of a turbine where a turbine rotor and a turbine blade are coupled, a hole is drilled through the part in a state with the turbine rotor fork and the turbine blade fork meshed with each other, then each drilled hole is reamed to achieve a target fitting accuracy and surface finish. This method of forming a pin insertion hole in which first a hole is drilled and next the drilled hole is reamed is described, for example, in Japanese Unexamined Patent Publication No. Sho 60(1985)-222503 (PTL1).

[Citation List]

[Patent Literature]

JP 2010 043595 discloses a method for manufacturing pin insertion holes in a multi-finger root of a steam turbine blade made of Ti alloy, comprising the steps of reaming the pin insertion holes, removing scraps, and then laser peening the hole surface to improve fatigue strength.

WO 2010/137340 discloses a method for manufacturing pin insertion holes in a multi-finger root of a steam turbine blade comprising the steps of reaming the pin insertion holes, removing the chips after reaming, and then laser peening the hole surface to improve fatigue strength.

US 4 440 529 generally relates to drilling of holes in a workpiece using a drill bit, and teaches to rotate the drill bit during retraction from the hole to obtain inclined scratches instead of axial scratches in order to avoid fatigue cracks.

US 1 933 149 generally discloses a reaming machine where the drill or reamer is rotated when retracting it from the workpiece.

[PTL 1] Japanese Unexamined Patent Publication No. Sho 60(1985)-222503

[Non Patent Literature]

[NPTL1] Walter D. Pilkey, "Peterson's Stress Concentration Factors," (USA), 2nd Edition, Wiley-Interscience, Apr. 18, 1997

[Summary of Invention]

[Technical Problem]

For thermal power generation plants, there are cases in which, with an intention of adopting larger turbine blades, a high-strength blade material is used. In such cases, with a high-strength material having high notch sensitivity, it is necessary to pay particular attention to the surface finish of pin insertion holes so as to minimize their surface ruggedness.

If, while the surface of a drilled hole is being finished by reaming, chips attach to edges of the reamer, they detrimentally affect, as built-up edges, the finish of the surface being reamed. Therefore, while reaming a hole, air or cutting oil is kept applied to the hole portion being reamed so as to cause chips generated by reaming to be removed from the hole.

There are, however, cases in which fine chips generated during reaming of a pin insertion hole are left attached to edges of the reamer without being removed from the pin insertion hole and such chips result in leaving fine scratches on the inner surface of the pin insertion hole when the reamer is removed from the pin insertion hole. According to the study made by the present inventors, in cases where a part through which pin insertion holes are formed is made of a high-strength material, even fine scratches left on the inner surface of a pin insertion hole when the reamer is removed from the pin insertion hole can detrimentally affect the fatigue strength of the part.

In the existing method disclosed in PTL 1 (Japanese Unexamined Patent Publication No. Sho 60(1985)-222503), for forming a pin insertion hole through a turbine blade, no consideration is given to scratches generated by fine chips on the inner surface of a pin insertion hole when the reamer is removed from the pin insertion hole. When an existing method for forming a pin insertion hole through a turbine blade is applied, as it is, to a turbine blade made of a high-strength material with high notch sensitivity, the detrimental effect of scratches formed on the inner surface of a pin insertion hole cannot be prevented.

An object of the present invention is to provide a method for manufacturing a multi-finger pinned root and a turbine blade, the method being applicable with high strength reliability even to a turbine blade which is made of a high-strength material and which is to be coupled to a rotor in a pin and finger root form.

[Solution to Problem]

The above problem is solved by the subject matter of the appended claims. In particular, the present invention is directed to a method for manufacturing a multi-finger pinned root for a turbine blade with the features of claim 1 and to a turbine blade with the features of claim 7.

[Advantageous Effects of Invention]

According to the present invention, the direction of a scratch formed on the inner surface of a pin insertion hole and the direction of tensile stress generated on the inner surface of the pin insertion hole are close to be parallel to each other, so that fatigue strength reduction due to the scratch can be inhibited.

[Brief Description of Drawings]

FIG. 1 is a construction drawing of a turbine blade attachment base;
FIG. 2 is a schematic drawing of a reaming machine;
FIG. 3 is a schematic drawing of a reamer;
FIGS. 4A and 4B schematically show the inner surface of a pin insertion hole formed using a related-art technique; FIG. 4A being an enlarged view of the inner surface and FIG. 4B being a sectional view taken along line A--A in FIG. 4A;
FIGS. 5A and 5B schematically show the inner surface of a pin insertion hole formed according to an embodiment of the present invention; FIG. 5A being an enlarged view of the inner surface and FIG. 5B being a sectional view taken along line A--A in FIG. 5A;
FIG. 6 is a graph showing a relationship between stress range and fatigue life of a high-strength material;
FIG. 7 is a graph showing a relationship between stress concentration factor Kt and scratch inclination θ;
FIG. 8 is a drawing showing relationships between scratch inclination θ, reamer movement in rotational direction, and reamer movement in removal direction; and
FIGS. 9A and 9B show a microscope; FIG. 9A being a schematic view and FIG. 9B being a sectional view of portion marked A in FIG. 9A.

[Description of Embodiments]

An embodiment of the present invention will be described below with reference to drawings.

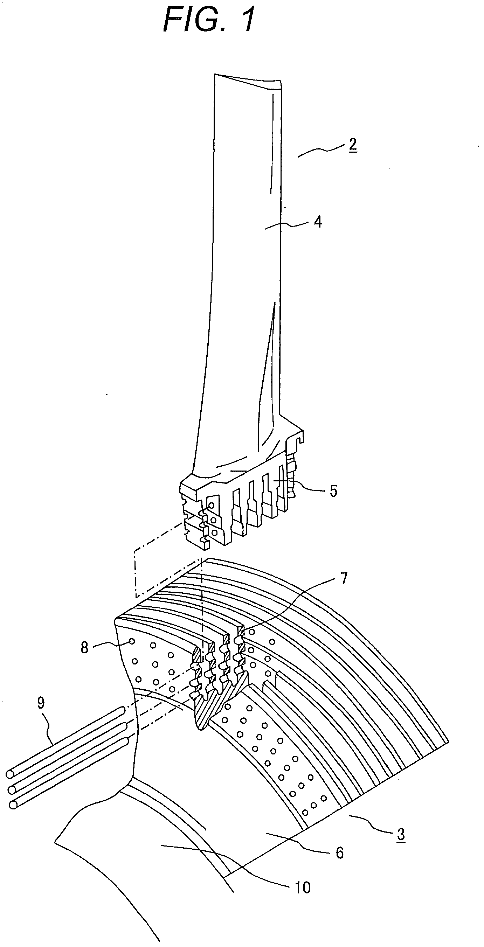

FIG. 1 is a construction drawing of a turbine blade attachment base. The turbine blade attachment base is comprised of turbine blades 2 and a turbine rotor 3 combined together. Each turbine blade 2 has a blade section 4 which receives a steam flow and converts the energy of the steam flow into a rotational energy for the turbine and a blade fork 5. The turbine rotor 3 has a turbine rotary shaft 10 and a rotor disc 6 provided circumferentially over the turbine rotary shaft 10. The rotor disc 6 has a rotor fork 7 formed thereon.

The blade fork 5 of the turbine blade 2 and the rotor fork 7 of the turbine rotor 3 are arranged to mesh with each other. The blade fork 5 and the rotor fork 7 have pin insertion holes 8 extending through them in the rotor axis direction. Coupling pins 9 are inserted into the pin insertion holes 8 thereby filling the pin insertion holes 8 and fixing the turbine blade 2 to the turbine rotor 3.

When the turbine rotates causing a centrifugal force in a radial direction (an upward direction as seen in FIG. 1) to work on the turbine blade 2, the coupling pins 9 support the centrifugal force thereby allowing the turbine blade 2 to be kept coupled to the turbine rotor 3. As the coupling pins 9 support the centrifugal force working on the turbine blade 2 when the turbine rotor 3 rotates, a circumferential tensile stress is generated over the inner surface of each pin insertion hole 8 resulting in a high risk of fatigue damage to the inner surface of each pin insertion hole 8. Hence, to reduce the fatigue damage risk, particular attention should be paid to the machining accuracy for and the surface finish of each pin insertion hole 8.

The turbine blade is made of a Ti alloy which allows the turbine blade to have a greater length or of a high-strength steel with a tensile strength of 1300 MPa or higher. Since, as mentioned in the foregoing, a high-strength material has high notch sensitivity, the surface finish of a turbine blade made of a high-strength material requires particular attention to be paid thereto.

To form the pin insertion holes 8 through the turbine blade attachment base, holes are drilled through the turbine rotor 3 and the turbine blade 2 with their forks meshed with each other, then the drilled holes are reamed to achieve target fitting accuracy and surface roughness.

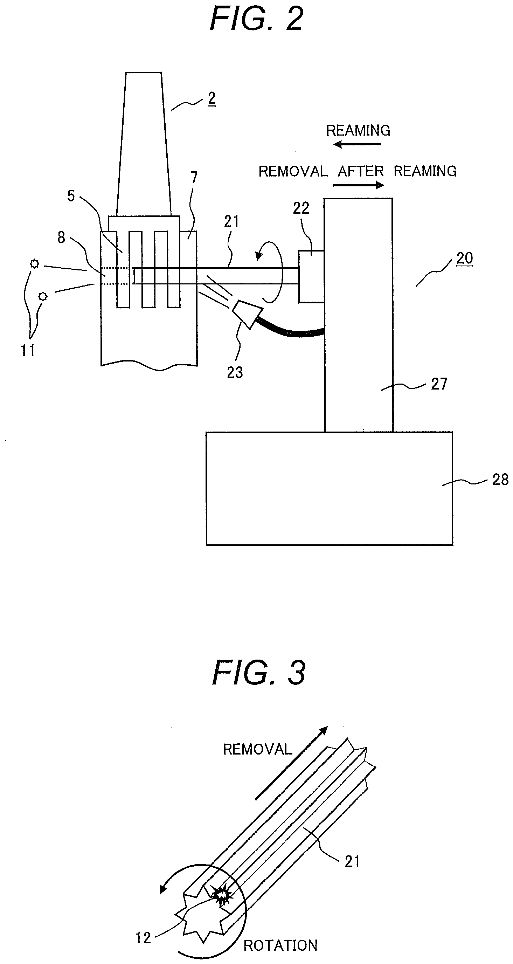

FIG. 2 schematically shows a reaming machine 20. The reaming machine 20 is made up of a reamer 21 used to finish each pin insertion hole drilled through the turbine fork 5 and the rotor fork 7 included in the turbine blade attachment base, a chuck section 22 for fixing the reamer 21 in a driving section, an arm 27 which includes the driving section and drives the driving section in the rotary axis direction, a mount 28 on which the arm 27 is mounted, and an air blower 23 for blowing chips attaching to the reamer 21 during reaming to outside the pin insertion hole being reamed.

When chips generated during reaming attach to edges of the reamer 21, they detrimentally affect, as built-up edges, the surface of the pin insertion hole being reamed. To prevent this from occurring, the air blower 23 keeps blowing air into the pin insertion hole being reamed so as to remove chips 11 from the pin insertion hole 8. Still, there are cases in which, for example, a fine chip 12 remains, without being blown off, attached to an edge of the reamer 21 as shown in FIG. 3 to result in generating a fine scratch on the inner surface of the pin insertion hole when the reamer 21 is pulled out after reaming is finished.

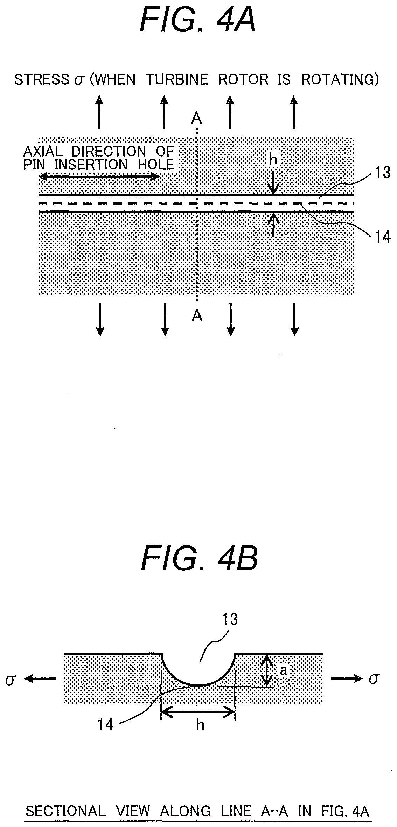

FIG. 4A shows an enlarged view of the inner surface of a reamed pin insertion hole 8 in a state after the reamer 21 used is removed without being rotated (in a related-art case) and FIG. 4B shows a sectional view taken along line A--A in FIG. 4A. As shown in FIGS. 4A and 4B, the inner surface of the pin insertion hole 8 has a fine scratch 13 generated, along the axial direction of the pin insertion hole, by a fine chip 12. When the turbine rotor 3 rotates, a large stress is generated circumferentially along the inner surface of the pin insertion hole 8 causing the stress to concentrate on a bottom 14 of the scratch 13 generated by the fine chip 12. Hence, there is a risk of a fatigue crack being generated and growing along the bottom 14 of the scratch 13.

The depth a of the scratch is up to about 10 $\mu$m. In the case of steam turbines used at nuclear power generation plants, turbine blades are made of steel with a tensile strength lower than 900 MPa, and the fatigue strength of such turbine blades are not detrimentally affected by scratches with a depth of up to about 10 $\mu$m. In the case of thermal power generation plants, however, there are cases in which, with an intention of adopting larger turbine blades, a higher-strength blade material is used. In the present embodiment, turbine blades made of the specific claimed high-strength material are used so as to allow the turbine blades to be made larger. Since high-strength materials have high notch sensitivity, their fatigue strength can possibly be affected detrimentally even by scratches 13 with a depth of about 10 $\mu$m generated by fine chips 12.

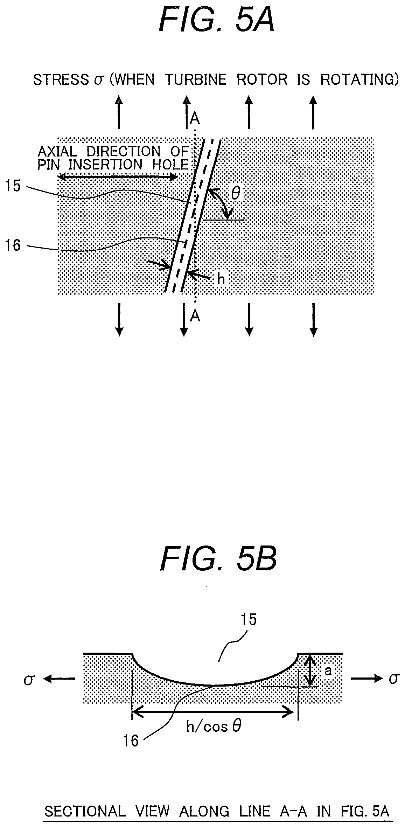

FIG. 5A shows an enlarged view of the inner surface of a reamed pin insertion hole 8 in a state after the reamer 21 used is removed while being rotated under prescribed conditions according to an embodiment of the present invention and FIG. 5B shows a sectional view taken along line A--A in FIG. 5A. In this case, when the reamer is removed from the pin insertion hole 8, the fine chip 12 is spirally pulled out generating a scratch 15 inclined by an angle of $\theta$ with respect to the axial direction of the pin insertion hole. Having the scratch formed with an inclination with respect to the axial direction of the pin insertion hole as shown in FIG. 5A can decrease the degree of stress concentration, i.e. stress concentration factor Kt (= the stress at the bottom of the scratch divided by the stress with no scratch present) on a bottom 16 of the scratch. This will be described in detail in the following. As for the increase of stress caused by a scratch, simplified calculation is possible, for example, according to NPTL 1 (Walter D. Pilkey, "Peterson's Stress Concentration Factors," (USA), 2nd Edition, Wiley-Interscience, Apr. 18, 1997).

First, with reference to FIGS. 4A and 4B, a related-art case in which, when the reamer used to ream a pin insertion hole is removed without being rotated, a scratch running along the axial direction of the pin insertion hole is formed on the inner surface of the pin insertion hole will be described. The sectional shape in the direction of stress of a scratch 13 generated by a chip can be approximated to a semi-ellipse with depth a and width h. According to the above NPTL 1, the stress concentration factor Kt in this case is represented by expression (1) .

$$Kt = 1 + \frac{4a}{h} \qquad\qquad (1)$$

With the ratio of depth to width (a/h) of the scratch 13 generated by a chip being about 0.1:

$$Kt = 1 + 4 \times 0.1 = 1.4 \qquad (2)$$

This follows that the stress at the bottom 14 of the scratch 13 generated by a chip is about 1.4 times as large as the stress generated with no scratch present.

Next, with reference to FIGS. 5A and 5B, a case according to the present embodiment of the present invention will be described. The sectional shape in the direction of stress of a scratch 15 generated by a chip can be approximated to a semi-ellipse with depth a and width h/cosθ. The stress concentration factor Kt in the present embodiment is represented by expression (3) obtained by replacing h in expression 1 with h/cosθ.

$$Kt = 1 + \frac{4a}{h}\cos\theta \qquad\qquad (3)$$

With the ratio of depth to width (a/h) of the scratch 15 generated by a chip also being 0.1 and the inclination θ of the scratch 15 being 60°:

$$Kt = 1 + 4 \times 0.1 \times 0.5 = 1.2 \qquad (4)$$

As described above, in the present embodiment in which the reamer used to ream a pin insertion hole is removed while being rotated causing a scratch generated by a chip to be inclined by 60° as θ with respect to the axial direction of the pin insertion hole, the stress concentration factor Kt is reduced to 1.2 compared with 1.4 obtained in a related-art case in which the reamer is removed without being rotated causing a scratch generated by a chip to run along the axial direction of the pin insertion hole. Namely, the stress at the bottom of a scratch can be reduced by 14% (1 - 1.2/1.4 ≈ 0.14).

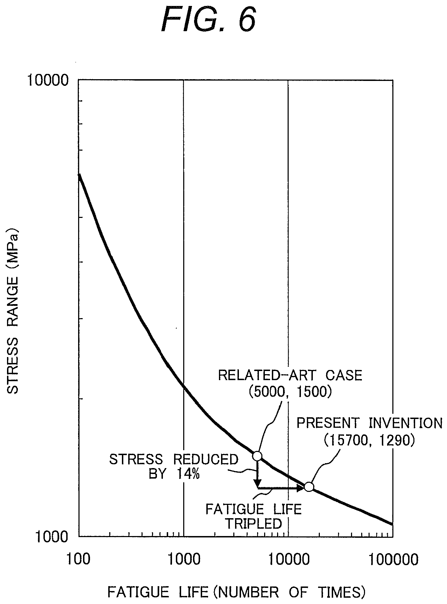

FIG. 6 is a graph showing an example relationship between stress range and fatigue life of a turbine blade made of a high-strength material. When, in the related-art case, the range of stress (range of stress variation occurring between the start and end of the turbine operation) generated at the bottom 14 of the scratch 13 is 1500 MPa and the fatigue life of the turbine blade is 5000 times, reducing the stress by 14% according to the present embodiment generates an effect of approximately tripling the fatigue life to 15700 times.

Generally, a fatigue crack grows perpendicularly to the direction of stress. Therefore, in the related-art case, if a crack is generated in the scratch 13, it will grow along the bottom 14 of the scratch subjected to a high stress. In the present embodiment, if a crack is generated in the scratch 15, it will grow following a path which deviates from the scratch 15 generated by a chip, so that the stress at the front end of the growing crack is smaller than in the related-art case. This is an effect lengthening the fatigue life of the turbine blade.

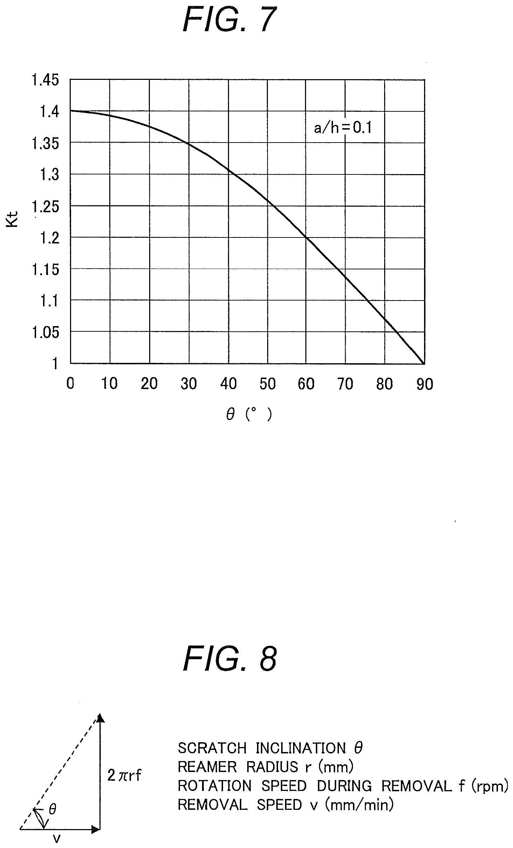

FIG. 7 is a graph showing a relationship between stress concentration factor Kt and scratch inclination θ based on expression (3) with 0.1 assigned to a/h. As shown, when the inclination of the scratch 15 generated by a chip is small, the stress concentration factor Kt is not adequately reduced. However, when a scratch on the inner surface of a pin insertion hole in the turbine blade attachment base is inclined with respect to the axial direction of the pin insertion hole, the direction of the scratch and the direction of tensile stress generated on the inner surface of the pin insertion hole are closer to be parallel to each other than in the related-art case. This generates an effect of reducing the fatigue strength reduction caused by the scratch. Note that the above described inclination of a scratch on the inner surface of a pin insertion hole in the turbine blade attachment base with respect to the axial direction of the pin insertion hole does not refer to an inclination resulting from a manufacturing error.

According to the invention, the inclination angle θ of the scratch is 60° or greater, so that the direction of the scratch on the inner surface of the pin insertion hole and the direction of tensile stress generated on the inner surface of the pin insertion hole are adequately close to be parallel to each other. This makes it possible to effectively inhibit the fatigue strength reduction caused by the scratch. As seen from FIG. 7, when θ ≥ 60°, the stress can be reduced by 14% or more.

More generally, a target value of Kt dependent on the situation is determined and the minimum value of θ to be achieved to realize the target value of Kt is determined as expressed by expression (5) based on expression (3).

$$\theta \ge \cos^{-1}\left\{\frac{(Kt-1)h}{4a}\right\} \qquad (5)$$

As described above, an appropriate value of inclination θ of the scratch 15 required to realize a target value of Kt = 1.2 can be obtained using expression (5).

Expression (5) can be satisfied by appropriately setting conditions for removing the reamer 21. Where the radius of the reamer 21 is r (mm), the rotation speed of the reamer 21 being removed is f (rpm), and the reamer removal speed is v (mm/min), expression (6) is established representing the relationships between the scratch inclination angle θ, the amount of reamer movement per minute in the rotational direction, and the amount of reamer movement per minute in the removal direction as shown in FIG. 8.

$$\theta = \tan^{-1}\left(2\pi r \cdot \frac{f}{v}\right) \qquad (6)$$

Based on expressions (3), (5), and (6), the conditions for removing the reamer 21 without allowing stress concentration factor Kt to exceed a target value are represented by expression (7).

$$Kt \ge 1 + \frac{4a}{h}\cos\theta = 1 + \frac{4a}{h}\sqrt{\frac{1}{1+\left(2\pi r \cdot \frac{f}{v}\right)^2}} \qquad (7)$$

Where a/h = 0.1 and Kt = 1.2, expression (7) becomes as follows.

$$1.2 \ge 1 + 0.4\sqrt{\frac{1}{1+\left(2\pi r \cdot \frac{f}{v}\right)^2}} \qquad (8)$$

When the radius r of the reamer 21 is 6 mm, the rotational speed f at which the reamer is removed and the removal speed v of the reamer are required to satisfy the following expression.

$$\frac{f}{v} \ge 0.046 \qquad (9)$$

Thus, removing the reamer 21 based on the conditions satisfying expressions (7), (8), and (9) makes it possible to keep the stress concentration factor Kt on a crack below a target value. Therefore, according to the present embodiment, high strength reliability can be obtained even in cases where a pin and finger root form is used for turbine blades made of a high-strength material with high notch sensitivity.

There are cases in which, when a hole is drilled, a burr removing drill is used in addition to a drill used to form the hole. The burr removing drill is withdrawn from the drilled hole while being rotated so as to remove burrs. Unlike in drilling, however, burr generation is not conspicuous in reaming due to the nature of the process. Generally, therefore, reamers used for reaming are removed without being rotated.

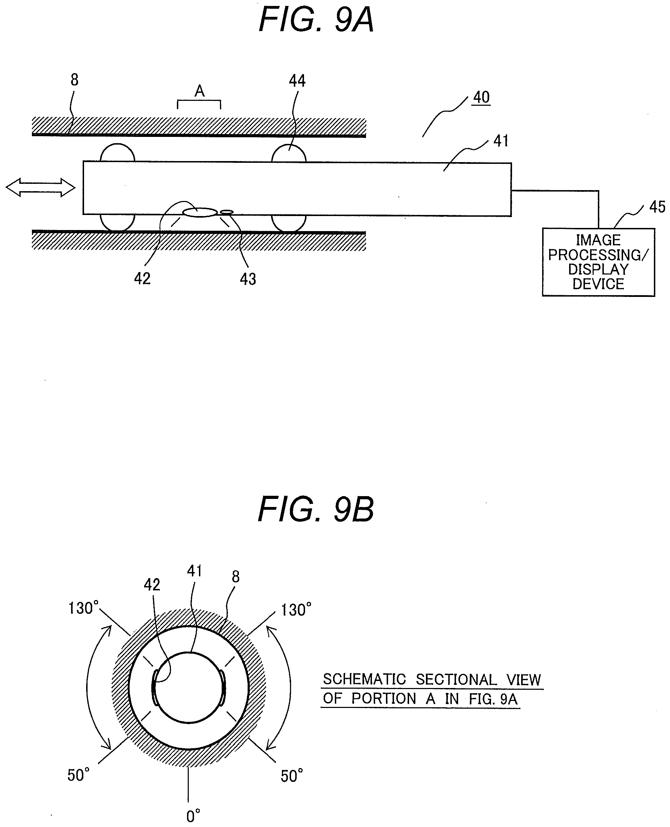

Next, inspection of a crack generated on the inner surface of a pin insertion hole will be described. FIG. 9A schematically shows a microscope 40 used to inspect the inner surface of a pin insertion hole 8 after the hole is reamed and FIG. 9B shows a schematic sectional view of portion A shown in FIG. 9A.

In the present embodiment, after a pin insertion hole is reamed, the reamer used for reaming is removed and the inner surface of the pin insertion hole is observed to make sure that the angle θ formed between the scratch generated on the inner surface of the pin insertion hole and the axial direction of the pin insertion hole is not smaller than a predetermined angle.

The microscope 40 is comprised of a rod-like scope body 41 and an image processing/display device 45. The scope body 41 is provided, at a front end portion thereof, with two cameras 42. For each of the cameras 42, a light 43 to be used as a light source for shooting the inner surface of a pin insertion hole is provided close to the camera 42. The scope body 41 is further provided with two rubber tires 44, one forwardly of the cameras 42 and the other rearwardly of the cameras 42. To inspect a pin insertion hole 8, the scope body 41 is inserted into the pin insertion hole 8, the inner surface of the pin insertion hole 8 is shot by the cameras 42, and the inner surface of the pin insertion hole 8 thus shot is displayed on the image processing/display device 45.

Referring to FIG. 9B, the cameras 42 can shoot, on both sides across the axis of the pin insertion hole 8, such areas of the inner surface of the pin insertion hole 8 which range in angle, measured based on the axis of the pin insertion hole 8, from 50° to 130° with respect to 0° corresponding to the inner surface portion toward the rotor axis. The 50° to 130° ranges on both sides across the axis of the pin insertion hole 8 cover areas of the inner surface of the pin insertion hole 8 which are repeatedly subjected to a large tensile load while the turbine is rotating and which are desired to be free of circumferential surface irregularities. Therefore, moving the scope body 41 once through the pin insertion hole 8 can complete observation of the areas to be observed of the inner surface of the pin insertion hole 8.

The rubber tires 44 allow the cameras 42 to shoot the inner surface of the pin insertion hole 8 without coming into direct contact with the inner surface. The rubber tires 44 allow the scope body 41 to be moved into and out of the pin insertion hole 8 smoothly without injuring the inner surface of the pin insertion hole 8.

As described above, the microscope 40 makes it possible, just by inserting the scope body 41 into the pin insertion hole, to quickly observe the inner surface of the pin insertion hole 8 without injuring the pin insertion hole 8. This embodiment makes it possible to determine, after the reamer is removed from a pin insertion hole, whether or not any scratch which might detrimentally affect the fatigue strength of the turbine blade is present on the inner surface of the pin insertion hole. Namely, when the angle $\theta$ formed between a scratch on the inner surface of a pin insertion hole and the axial direction of the pin insertion hole is smaller than a predetermined value (for example, when $\theta$ is such that a target stress concentration factor Kt cannot be realized based on the foregoing expression (5)), it is determined that the scratch may detrimentally affect the fatigue strength of the turbine blade. Based on this criterion, whether such a scratch is present on the inner surface of the pin insertion hole is determined. If such a scratch is found on the inner surface of the pin insertion hole, the scratch is removed, for example, by grinding.

[Reference Signs List]

| | |
|---|---|
| 2 | Turbine blade |
| 3 | Turbine rotor |
| 4 | Blade section |
| 5 | Blade fork |
| 6 | Rotor disc |
| 7 | Rotor fork |
| 8 | Pin insertion hole |
| 9 | Coupling pin |
| 10 | Turbine rotary shaft |
| 11 | Chip |
| 12 | Fine chip |
| 13 | Scratch (e.g. scratch 13 generated by a chip) |
| 14 | Bottom (e.g. bottom 14 of the scratch) |
| 15 | Scratch (e.g. scratch 15 generated by a chip) |
| 16 | Bottom (e.g. bottom 16 of the scratch) |
| 20 | Reaming machine |
| 21 | Reamer |
| 22 | Chuck section |
| 23 | Air blower |
| 27 | Arm |
| 28 | Mount |
| 40 | Microscope |
| 41 | Scope body |
| 42 | Camera |
| 43 | Light |

44    Rubber tire

**Claims**

1. A method for manufacturing a multi-finger pinned root for a turbine blade (2) made of a Ti alloy or a high-strength steel with a tensile strength of 1300 MPa or higher and configured to be attached to a turbine rotor (3), the multi-finger pinned root configured for coupling the turbine blade (2) and a rotor disc (6) of the turbine rotor (3), wherein a pin insertion hole (8) is formed through a turbine blade attachment base through steps of:

   drilling a through-hole (8);
   reaming the drilled through-hole (8) using a reamer (21) ; and
   removing the reamer (21) from the reamed through-hole (8) while rotating the reamer (21) after the reaming, wherein, a scratch (15) is formed on an inner surface of the pin insertion hole (8) and the scratch (15) is inclined with respect to an axial direction of the pin insertion hole (8), with an angle of inclination $\theta$ being 60° or greater satisfying the following expression:

$$\theta \geq \cos^{-1}\left\{\frac{(Kt-1)h}{4a}\right\}$$

   where a/h being 0.1 is an aspect ratio of the scratch (15), with a being depth and h being width, Kt being 1.2 is an allowable stress concentration factor.

2. The method for manufacturing a multi-finger pinned root according to claim 1, wherein the reamer (21) is removed at a reamer rotation speed f in rpm and a reamer removal speed v in mm/min both determined to satisfy the following expression:

$$Kt \geq 1 + \frac{4a}{h}\sqrt{\frac{1}{1+\left(2\pi r \cdot \frac{f}{v}\right)^2}}$$

   where r is a radius in mm of the reamer.

3. The method for manufacturing a multi-finger pinned root according to claim 1, wherein, after the reamer (21) is removed from the pin insertion hole (8), the inner surface of the pin insertion hole (8) is observed to determine that the angle $\theta$ is not smaller than the predetermined angle.

4. The method for manufacturing a multi-finger pinned root according to one of claims 1 and 3, wherein the inner surface of the pin insertion hole (8) is observed using a microscope (40) .

5. The method for manufacturing a multi-finger pinned root according to one of claims 1 and 3, wherein, of the inner surface of the pin insertion hole (8), only a predetermined area repeatedly subjected to a large tensile load while the turbine is rotating is observed.

6. The method for manufacturing a multi-finger pinned root according to claim 5, wherein the area to be observed ranges from 50° to 130° with respect to 0° corresponding to a bottom toward the axis of the turbine rotor of the inner surface of the pin insertion hole (8).

7. A turbine blade (2) to be pin-coupled to a rotor disc (6) of a turbine rotor (3), wherein the turbine blade (2) has a multi-finger pinned root and is made of a Ti alloy or a high-strength steel with a tensile strength of 1300 MPa or higher, and a scratch (15) having a depth of up to 10 $\mu$m and formed by reaming using a reamer (21) on an inner surface of a pin insertion hole (8) formed as a through-hole through an attachment base of the turbine blade (2) is inclined with respect to an axial direction of the pin insertion hole (8), wherein an angle $\theta$ formed between the scratch (15) and the axial direction of the pin insertion hole (8) satisfies the following expression:

$$\theta \geq \cos^{-1}\left\{\frac{(Kt-1)h}{4a}\right\}$$

where a/h is an aspect ratio of the scratch (15), with a being depth and h being width, formed on the inner surface of the pin insertion hole (8) and Kt is an allowable stress concentration factor, and the aspect ratio a/h of the scratch (15) being 0.1 and the allowable stress concentration factor Kt being 1.2, the angle $\theta$ formed between the scratch (15) and the axial direction of the pin insertion hole (8) is 60° or greater.

8. The turbine blade according to claim 7, wherein the turbine blade (2) is for use in a last stage of a low-pressure turbine.

**Patentansprüche**

1. Verfahren zum Herstellen eines mehrfingrigen Einsteckfußes für eine Turbinenschaufel (2), die aus einer Titan-Legierung oder einem hochfesten Stahl mit einer Zugfestigkeit von 1300 MPa oder mehr hergestellt ist und konfiguriert ist, an einem Turbinenrotor (3) befestigt zu werden, wobei der mehrfingrige Einsteckfuß konfiguriert ist, die Turbinenschaufel (2) und eine Rotorscheibe (6) des Turbinenrotors (3) zu koppeln, wobei ein Stifteinsetzloch (8) durch eine Turbinenschaufel-Befestigungsbasis mittels der folgenden Schritte ausgebildet wird:

Bohren eines Durchgangslochs (8);
Aufweiten des gebohrten Durchgangslochs (8) unter Verwendung einer Reibahle (21); und
Entfernen der Reibahle (21) aus dem aufgeweiteten Durchgangsloch (8), wobei die Reibahle (21) nach dem Reiben gedreht wird, wobei eine Riefe (15) an einer inneren Oberfläche des Stifteinsetzlochs (8) ausgebildet wird und wobei die Riefe (15) in Bezug auf eine axiale Richtung des Stifteinsetzlochs (8) schräg ist, wobei ein Neigungswinkel $\theta$, der 60° oder mehr beträgt, dem folgenden Ausdruck genügt:

$$\theta \geq \cos^{-1}\left\{\frac{(Kt-1)h}{4a}\right\}$$

wobei a/h mit 0,1 ein Längenverhältnis der Riefe (15) ist, wobei a eine Tiefe und h eine Breite ist, wobei Kt mit 1,2 ein zulässiger Beanspruchungskonzentrationsfaktor ist.

2. Verfahren zum Herstellen eines mehrfingrigen Einsteckfußes nach Anspruch 1, wobei die Reibahle (21) mit einer Reibahlen-Drehzahl in min$^{-1}$ und mit einer Reibahlen-Entfernungsgeschwindigkeit v in mm/min entfernt wird, wobei beide Werte so festgelegt sind, dass sie dem folgenden Ausdruck genügen:

$$Kt \geq 1 + \frac{4a}{h}\sqrt{\frac{1}{1+\left(2\pi r \cdot \frac{f}{v}\right)^2}}$$

wobei $r$ der Radius der Reibahle in mm ist.

3. Verfahren zum Herstellen eines mehrfingrigen Einsteckfußes nach Anspruch 1, wobei dann, nachdem die Reibahle (21) aus dem Stifteinsetzloch (8) entfernt worden ist, die innere Oberfläche des Stifteinsetzlochs (8) betrachtet wird, um festzustellen, dass der Winkel $\theta$ nicht kleiner als der festgelegte Winkel ist.

4. Verfahren zum Herstellen eines mehrfingrigen Einsteckfußes nach einem der Ansprüche 1 und 3, wobei die innere Oberfläche des Stifteinsetzlochs (8) unter Verwendung eines Mikroskops (40) betrachtet wird.

5. Verfahren zum Herstellen eines mehrfingrigen Einsteckfußes nach einem der Ansprüche 1 und 3, wobei auf der inneren Oberfläche des Stifteinsetzlochs (8) nur ein festgelegter Bereich, der wiederholt einer großen Zugbelastung ausgesetzt ist, während sich die Turbine dreht, betrachtet wird.

**6.** Verfahren zum Herstellen eines mehrfingrigen Einsteckfußes nach Anspruch 5, wobei der betrachtete Bereich 50° bis 130° in Bezug auf 0°, die einem Boden in Richtung der Achse des Turbinenrotors entsprechen, der inneren Oberfläche des Stifteinsetzlochs (8) umfasst.

**7.** Turbinenschaufel (2), die mit einer Rotorscheibe (6) eines Turbinenrotors (3) über eine Stiftverbindung gekoppelt werden soll, wobei die Turbinenschaufel (2) einen mehrfingrigen Einsteckfuß hat und aus einer Titanlegierung oder einem hochfesten Stahl mit einer Zugfestigkeit von 1300 MPa oder mehr hergestellt ist, und wobei eine Riefe (15) eine Tiefe von bis zu 10 $\mu$m hat und durch Reiben unter Verwendung einer Reibahle (21) auf einer inneren Oberfläche des Stifteinsetzlochs (8), das als Durchgangsloch durch eine Befestigungsbasis der Turbinenschaufel (2) ausgebildet ist, in Bezug auf eine axiale Richtung des Stifteinsetzlochs (8) schräg ausgebildet ist, wobei ein Winkel θ, der zwischen der Riefe (15) und der axialen Richtung des Stifteinsetzlochs (8) ausgebildet ist, der folgenden Gleichung genügt:

$$\theta \geq \cos^{-1}\left\{\frac{(Kt-1)h}{4a}\right\}$$

wobei a/h ein Längenverhältnis der Riefe (15) ist, wobei a eine Tiefe und h eine Breite ist, die an der inneren Oberfläche des Stifteinsetzlochs (8) ausgebildet ist und *Kt* ein zulässiger Beanspruchungskonzentrationsfaktor ist, und wobei das Längenverhältnis a/h der Riefe (15) 0,1 beträgt und der zulässige Beanspruchungskonzentrationsfaktor *Kt* 1,2 beträgt, wobei der Winkel θ, der zwischen der Riefe (15) und der axialen Richtung des Stifteinsetzlochs (8) ausgebildet ist, 60° oder mehr beträgt.

**8.** Turbinenschaufel nach Anspruch 7, wobei die Turbinenschaufel (2) für einen Einsatz in einer letzten Stufe einer Niederdruckturbine vorgesehen ist.

## Revendications

**1.** Procédé pour fabriquer un pied goupillé multidoigts pour une aube de turbine (2) faite d'un alliage de Ti ou d'un acier haute résistance avec une résistance à la traction de 1 300 MPa ou plus et configurée pour être attachée à un rotor de turbine (3), le pied goupillé multidoigts étant configuré pour coupler l'aube de turbine (2) et un disque de rotor (6) du rotor de turbine (3), dans lequel un trou d'insertion de goupille (8) est formé à travers une base d'attache d'aube de turbine au moyen des étapes consistant à :

percer un trou traversant (8) ;
fraiser le trou traversant percé (8) en utilisant une fraise (21) ; et
retirer la fraise (21) du trou traversant fraisé (8) tout en mettant la fraise (21) en rotation après le fraisage, dans lequel une rayure (15) est formée sur une surface intérieure du trou d'insertion de goupille (8) et la rayure (15) est inclinée par rapport à une direction axiale du trou d'insertion de goupille (8), avec un angle d'inclinaison θ égal à 60° ou plus satisfaisant l'expression suivante :

$$\theta \geq \cos^{-1}\left\{\frac{(Kt-1)h}{4a}\right\} \qquad 3)$$

dans laquelle a/h égal à 0,1 est un rapport d'aspect de la rayure (15), avec a étant une profondeur et h étant une largeur, Kt égal à 1,2 est un facteur de concentration de contraintes admissibles.

**2.** Procédé pour fabriquer un pied goupillé multidoigts selon la revendication 1, dans lequel la fraise (21) est retirée à une vitesse de rotation de fraise f en tr/min et à une vitesse de retrait de fraiseuse v en mm/min, déterminées toutes deux de manière à satisfaire l'expression suivante :

$$Kt \geq 1 + \frac{4a}{h}\sqrt{\frac{1}{1+\left(2\pi r \cdot \frac{f}{v}\right)^2}} \qquad 1)$$

dans laquelle r est un rayon en mm de la fraise.

3. Procédé pour fabriquer un pied goupillé multidoigts selon la revendication 1, dans lequel, après que la fraise (21) a été retirée hors du trou d'insertion de goupille (8), la surface intérieure du trou d'insertion de goupille (8) est observée pour déterminer que l'angle θ n'est pas inférieur à l'angle prédéterminé.

4. Procédé pour fabriquer un pied goupillé multidoigts selon l'une des revendications 1 et 3, dans lequel la surface intérieure du trou d'insertion de goupille (8) est observée en utilisant un microscope (40).

5. Procédé pour fabriquer un pied goupillé multidoigts selon l'une des revendications 1 et 3, dans lequel, parmi la surface intérieure du trou d'insertion de goupille (8), seule une zone prédéterminée soumise à répétition à une grande charge de traction pendant que la turbine est mise en rotation est observée.

6. Procédé pour fabriquer un pied goupillé multidoigts selon la revendication 5, dans lequel la zone qu'il s'agit d'observer va de 50° à 130° par rapport à 0° correspondant à un fond en direction de l'axe du rotor de turbine de la surface intérieure du trou d'insertion de goupille (8).

7. Aube de turbine (2) qu'il s'agit de coupler par goupille à un disque de rotor (6) d'un rotor de turbine (3), dans laquelle l'aube de turbine (2) a un pied goupillé multidoigts et est faite d'un alliage de Ti ou d'un acier haute résistance avec une résistance à la traction de 1 300 MPa ou plus, et une rayure (15) ayant une profondeur de jusqu'à 10 μm et formée par fraisage en utilisant une fraise (21) sur une surface intérieure d'un trou d'insertion de goupille (8) formé à titre de trou traversant à travers une base d'attache de l'aube de turbine (2) est inclinée par rapport à une direction axiale du trou d'insertion de goupille (8), dans laquelle un angle θ formé entre la rayure (15) et la direction axiale du trou d'insertion de goupille (8) satisfait l'expression suivante :

$$\theta \geq \cos^{-1}\left\{\frac{(Kt-1)h}{4a}\right\} \qquad 4)$$

dans laquelle a/h est un rapport d'aspect de la rayure (15), avec a étant une profondeur et h étant une largeur, formée sur la surface intérieure du trou d'insertion de goupille (8) et Kt est un facteur de concentration de contraintes admissibles, et le rapport d'aspect a/h de la rayure (15) étant égal à 0,1 et le facteur de concentration de contraintes admissibles Kt étant égal à 1,2, l'angle θ formé entre la rayure (15) et la direction axiale du trou d'insertion de goupille (8) est de 60° ou plus.

8. Aube de turbine selon la revendication 7, dans laquelle l'aube de turbine (2) est destinée à une utilisation dans un dernier étage d'une turbine à basse pression.

# FIG. 1

# FIG. 2

# FIG. 3

# FIG. 4A

STRESS σ (WHEN TURBINE ROTOR IS ROTATING)

AXIAL DIRECTION OF
PIN INSERTION HOLE

h

13

14

# FIG. 4B

13

σ ←      → σ

a

14      h

SECTIONAL VIEW ALONG LINE A-A IN FIG. 4A

# FIG. 5A

STRESS $\sigma$ (WHEN TURBINE ROTOR IS ROTATING)

# FIG. 5B

SECTIONAL VIEW ALONG LINE A-A IN FIG. 5A

# FIG. 6

## FIG. 7

## FIG. 8

SCRATCH INCLINATION $\theta$
REAMER RADIUS r (mm)
ROTATION SPEED DURING REMOVAL f (rpm)
REMOVAL SPEED v (mm/min)

## FIG. 9A

## FIG. 9B

SCHEMATIC SECTIONAL VIEW
OF PORTION A IN FIG. 9A

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP SHO601985222503 A
- JP 2010043595 A
- WO 2010137340 A
- US 4440529 A
- US 1933149 A

**Non-patent literature cited in the description**

- **WALTER D. PILKEY.** Peterson's Stress Concentration Factors. Wiley-Interscience, 18 April 1997